# EUROPÄISCHE PATENTSCHRIFT

(11) **EP 1 001 882 B1**
(45) Veröffentlichungstag und Bekanntmachung des Hinweises auf die Patenterteilung: **05.12.2001**
(21) Anmeldenummer: 98944982.2
(22) Anmeldetag: 11.07.1998
(51) Int. Cl.: B41C 1/045, H04N 1/047

(54) **VERFAHREN ZUM POSITIONIEREN VON GRAVIERORGANEN**
METHOD FOR POSITIONING ENGRAVING ORGANS
PROCEDE DE POSITIONNEMENT D'ORGANES DE GRAVURE

(30) Priorität: 08.08.1997 DE 19734411
(43) Veröffentlichungstag der Anmeldung: 24.05.2000
(73) Patentinhaber: Heidelberger Druckmaschinen Aktiengesellschaft, 69115 Heidelberg (DE)
(72) Erfinder: WEIDLICH, Ernst-Rudolf, Gottfried, D-24159 Kiel (DE)
(86) Internationale Anmeldenummer: DE9801933
(87) Internationale Veröffentlichungsnummer: WO9907554

(56) Entgegenhaltungen:
- WO-A-96/33869
- WO-A-98/55301
- US-A- 5 438 422
- US-A- 5 492 057

## Beschreibung

Die Erfindung bezieht sich auf das Gebiet der elektronischen Reproduktionstechnik und betrifft ein Verfahren zum Positionieren von Gravierorganen in einer elektronischen Graviermaschine zur Gravur von Druckzylindern für den Tiefdruck, bei dem auf dem Druckzylinder mindestens zwei in Achsrichtung nebeneinander liegende Gravierstränge vorgegebener Strangbreiten mit jeweils einem zugeordneten Gravierorgan graviert werden, sowie eine elektronischen Graviermaschine zur Durchführung des Verfahrens.

Bei der Gravur von Druckzylindern in einer elektronischen Graviermaschine bewegt sich ein Gravierorgan, das beispielsweise einen Gravierstichel als Schneidwerkzeug aufweist, in axialer Richtung kontinuierlich oder schrittweise an einem rotierenden Druckzylinder entlang. Der von einem Graviersteuersignal gesteuerte Gravierstichel schneidet eine Folge von in einem Gravurraster angeordneten Vertiefungen, im folgenden Näpfchen genannt, in die Mantelfläche des Druckzylinders. Das Graviersteuersignal wird aus der Überlagerung eines die Tonwerte zwischen "Schwarz" und "Weiß" repräsentierenden Graviersignals mit einem periodischen Rastersignal gebildet. Während das periodische Rastersignal eine vibrierende Hubbewegung des Gravierstichels bewirkt, steuert das Graviersignal entsprechend den wiederzugebenden Tonwerten die Tiefen der in die Mantelfläche des Druckzylinders gravierten Näpfchen.

Für den Magazindruck müssen auf einem Druckzylinder eine Vielzahl axial nebeneinande liegender, streifenförmige Zylinderbereiche, Gravierstränge genannt, mit jeweils einem Gravierorgan gleichzeitig graviert werden. In den einzelnen Graviersträngen werden beispielsweise die verschiedenen Druckseiten eines Druckauftrages graviert. Die den einzelnen Graviersträngen zugeordneten Gravierorgane sind auf einem Gravierwagen montiert, der sich bei der Gravur in Achsrichtung an dem Druckzylinder entlang bewegt.

Voraussetzung für eine gute Reproduktionsqualität ist das passergenaue Einhalten der Strangbreiten der einzelnen Gravierstränge in Achsrichtung des Druckzylinders. Um eine passergenaue Gravur der Gravierstränge zu erreichen, müssen nach dem herkömmlichen Verfahren die Abstände zwischen den Gravierstichelspitzen der einzelnen Gravierorgane in Achsrichtung des Druckzylinders durch axiales Verschieben der Gravierorgane auf dem Gravierwagen mit hoher Genauigkeit auf die geforderten Strangbreiten eingestellt und dann der Gravierwagen mit den Gravierorganen relativ zum Druckzylinder derart verschoben werden, daß die Gravierstichelspitzen auf den jeweiligen axialen Gravur-Startposition der Gravierstränge positioniert sind.

Das herkömmliche Positionieren der Gravierstichelspitzen der Gravierorgane auf die Strangbreiten erfolgt im wesentlichen manuell durch einen Bediener, indem dieser die den Strangbreiten entsprechenden axialen Abstände der Gravierorgane zueinander zunächst grob einstellt und dann die Gravierstichelspitzen der Gravierorgane unter visueller Beobachtung der Gravierstichelspitzen mit Hilfe einer speziellen Mikroskopeinrichtung (Stichelzuordnungslehre) und von Hand betätigbarer Spindelantriebe fein positioniert.

Diese manuelle Vorgehensweise ist zeitraubend, insbesondere dann, wenn eine große Anzahl von Graviersträngen zu gravieren und somit eine große Anzahl von Gravierorganen zu positionieren ist. Außerdem hängt die Justiergenauigkeit im wesentlichen von der Sorgfalt des Bedieners ab.

Aus der WO-A-95/31332 ist bereits eine Einrichtung zum automatischen axialen Positionieren einer Vielzahl von Gravierorganen bei der Gravur von Druckzylindern mit Hilfe von motorischen Antrieben für die einzelnen, auf einem Gravierwagen angeordneten Gravierorgane und einer Sensorüberwachung bekannt.

Aus der WO-A-98/55301, die unter Artikel 54(3) EPÜ fällt, ist auch schon eine Positionsmeßeinrichtung für eine Graviermaschine bekannt, die aus einem auf axiale Positionen verschiebbaren Meßwagen mit Videokamera zur Erzeugung von Videobildern gravierter Näpfchen und einer Bildauswertestufe zur Auswertung der aufgenommenen Videobilder besteht.

Aufgabe der vorliegenden Erfindung ist es, ein Verfahren zum Positionieren von Gravierorganen in einer elektronischen Graviermaschine zur Gravur von Druckzylindern für den Tiefdruck sowie eine elektronische Graviermaschine zur Durchführung des Verfahrens derart zu verbessern, daß die Einstellung der axialen Abstände der Gravierorgane zueinander in kurzer Zeit mit hoher Genauigkeit automatisch erfolgt.

Diese Aufgabe wird bezüglich des Verfahrens durch die Merkmale des Anspruchs 1 und bezüglich der Graviermaschine durch die Merkmale des Anspruchs 15 gelöst.
Vorteilhafte Weiterbildungen und Ausgestaltungen der Erfindung sind in den Unteransprüchen angegeben.

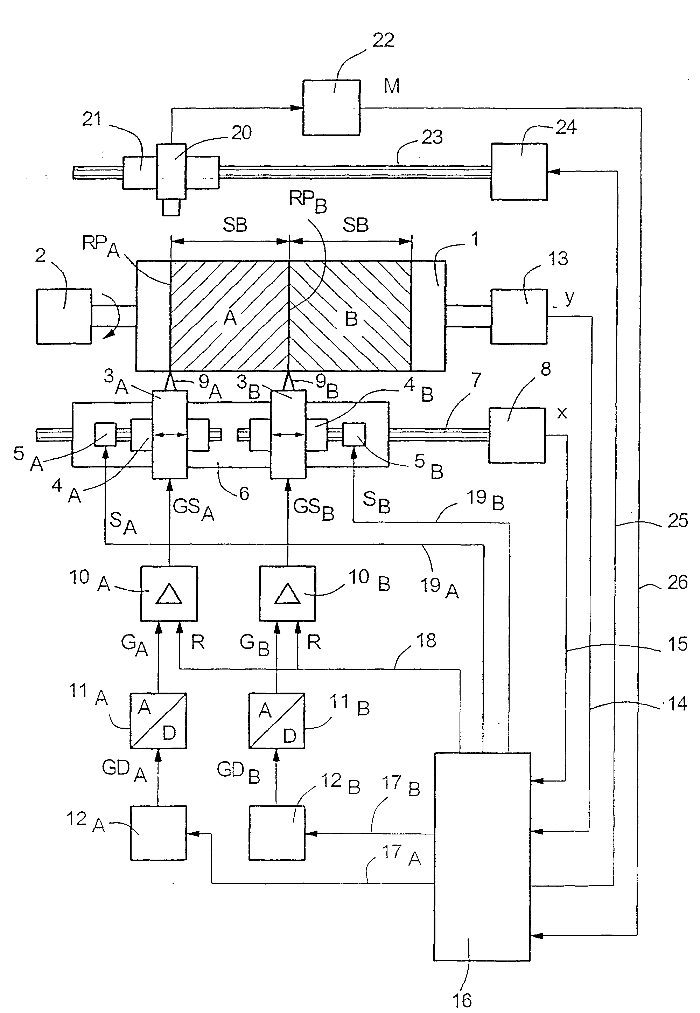

Die Erfindung wird nachfolgend anhand der Figur näher erläutert.

Die Figur zeigt ein prinzipielles Blockschaltbild einer Graviermaschine mit einem Druckzylinder (1), der von einem Zylinderantrieb (2) rotatorisch angetrieben wird. Die Graviermaschine ist beispielsweise ein HelioKlischograph® der Firma .Hell Gravure Systems GmbH, Kiel, DE.

Auf dem Druckzylinder (1) sollen mehrere in Achsrichtung des Druckzylinders (1) nebeneinander liegende Gravierstränge, im Ausführungsbeispiel zwei Gravierstränge (A, B) mit gleichen axialen Strangbreiten (SB), mit jeweils einem zugeordneten Gravierorgan (3_{A}, 3_{B}) graviert werden. Die Gravierorgane (3_{A}, 3_{B}) sind im Ausführungsbeispiel als elektromagnetische Gravierorgane mit Graviersticheln als Schneidwerkzeuge ausgebildet.

Die Gravierorgane (3_{A}, 3_{B}) sind auf einzelnen Graviersupporten (4_{A}, 4_{B}) montiert, die mittels geeigneter motorischer Antriebe (5_{A}, 5_{B}) auf einem Gravierwagen (6) in Achsrichtung des Druckzylinders (1) gegeneinander verschiebbar und auf dem Gravierwagen (6) in den eingestellten Positionen der Gravierorgane (3_{A}, 3_{B}) arretierbar sind. Die motorischen Antriebe (5_{A}, 5_{B}) können beispielsweise als Ketten-, Zahnrad-, Zahnriemen- oder, wie im Ausführungsbeispiels, als Spindelantriebe ausgebildet sein. Alternativ können die Graviersupporte (4_{A}, 4_{B}) auch durch manuell betätigte Feinantriebe verschoben werden.

Der Gravierwagen (6) wird zur axialen Positionierung der Gravierorgane (3_{A}, 3_{B}) relativ zum Druckzylinder (1) und zum Vorschub der Gravierorgane (3_{A}, 3_{B}) während der Gravur über eine Spindel (7) von einen Gravierwagenantrieb (8) in Achsrichtung des Druckzylinders (1) bewegt.

Die Spindelantriebe (5_{A}, 5_{B}) für die Graviersupporte (4_{A}, 4_{B}) und der Gravierwagenantrieb (8) für den Gravierwagen (6) sind als Präzisionsantriebe mit Schrittmotoren ausgebildet. Jeder Schrittmotor wird den durch eine Motortaktfolge angesteuert, von der ein Takt jeweils einem zurückgelegten Weginkrement des Graviersupports (4_{A}, 4_{B}) oder des Gravierwagens (6) entspricht. Somit kann durch Zählen der Takte der Motortaktfolge jeweils die axiale Position des Graviersupports (4_{A}, 4_{B}) oder des Gravierwagens (6) festgestellt bzw. der Graviersupport (4_{A}, 4_{B}) oder der Gravierwagen (6) durch Rückwärtszählen einer vorgegebenen Anzahl von Takten auf eine definierte axiale Position verschoben werden. Derartige Positionierungsantriebe sind bekannt und im Handel erhältlich.

Jedes Gravierorgan (3_{A}, 3_{B}) schneiden mit seinem Gravierstichel (9_{A}, 9_{B}) Gravierlinie für Gravierlinie eine Folge von in einem Gravurraster angeordneten Näpfchen in die Mantelfläche des rotierenden Druckzylinders (1), während sich der Gravierwagen (6) mit den Gravierorganen (3_{A}, 3_{B}) in Vorschubrichtung an dem Druckzylinder (1) entlang bewegt.

Die Gravur der Näpfchen erfolgt auf einzelnen, kreisförmig in Umfangsrichtung um den Druckzylinder (1) verlaufenden Gravierlinien, wobei der Gravierwagen (6) jeweils nach der Gravur der Näpfchen einer Gravierlinie einen axialen Vorschubschritt zur nächsten Gravierlinie ausführt. Ein derartiges Gravierverfahren ist beispielsweise in der US-PS 4,013,829 bekannt.

Alternativ kann die Gravur der Näpfchen auch in einer helixförmig um den Druckzylinder (1) verlaufenden Gravierlinie erfolgen, wobei der Gravierwagen (6) dann während der Gravur eine kontinuierliche Vorschubbewegung ausführt.

Die Gravierstichel (9_{A}, 9_{B}) der Gravierorgane (3_{A}, 3_{B}) werden durch Graviersteuersignale (GS_{A}, GS_{B}) gesteuert. Die Graviersteuersignale (GS_{A}, GS_{B}) werden in Gravierverstärkern (10_{A}, 10_{B}) aus der Überlagerung eines periodischen Rastersignals (R) mit Graviersignalwerten (G_{A}, G_{B}) gebildet, welche die Tonwerte der zu gravierenden Näpfchen zwischen "Schwarz" und "Weiß" repräsentieren. Während das periodische Rastersignal (R) eine vibrierende Hubbewegung der Gravierstichel (9_{A}, 9_{B}) zur Erzeugung des Gravurrasters bewirkt, bestimmen die Graviersignalwerte (G) entsprechend den zu gravierenden Tonwerten die jeweilige Eindringtiefe der Gravierstichel (9_{A}, 9_{B}) in die Mantelfläche des Druckzylinders (1).

Die Frequenz des Rastersignals (R), die Umfangsgeschwindigkeit des Druckzylinders (1) und die axiale Vorschubschrittweite des Gravierwagens (6) legen die Geometrie des Gravurrasters bezüglich Rasterwinkel und Rasterweite fest.

Die analogen Graviersignalwerte (G_{A}, G_{B}) werden in A/D-Wandlern (11_{A}, 11_{B}) aus Gravurdaten (GD_{A}, GD_{B}) gewonnen, die in Gravurdatenspeichern (12_{A}, 12_{B}) gespeichert und aus diesen Gravierlinie für Gravierlinie ausgelesen und den A/D-Wandlern (11_{A}, 11_{B}) zugeführt werden. Dabei ist jedem Gravierort für ein Näpfchen auf dem Druckzylinder (1) ein Gravurdatum von mindestens einem Byte zugeordnet, welches unter anderem als Gravierinformation den zu gravierenden Tonwert zwischen "Schwarz" und "Weiß" enthält.

Jeder Gravierort in dem Gravurraster ist durch Ortskoordinaten (x, y) eines XY-Koordinatensystems definiert, das in Umfangsrichtung und in Achsrichtung orientiert ist. Der Gravierwagenantrieb (8) erzeugt die Ortskoordinaten (x) der Gravierorte in Vorschubrichtung und ein mit dem Druckzylinder (1) mechanisch gekoppelter Positionsgeber (13) erzeugt die entsprechenden Ortskoordinaten (y) der Gravierorte in Umfangsrichtung. Die Ortskoordinaten (x, y) werden über Leitungen (14, 15) einem Steuerwerk (16) zugeführt.

Das Steuerwerk (16) steuert die Gravurdatenspeicher (12_{A}, 12_{B}) beim Auslesen der Gravurdaten (GD_{A}, GD_{B}) sowie die gesamten Abläufe bei der Gravur in der Graviermaschine.

Aus den Ortskoordinaten (x, y) werden in dem Steuerwerk (16) die Adressen der Gravurdatenspeicher (12_{A}, 12_{B}) berechnet. Das Steuerwerk (16) erzeugt außerdem Lesetaktfolgen, mit denen die Gravurdaten (GD_{A}, GD_{B}) aus den Gravurdatenspeichern (12_{A}, 12_{B}) ausgelesen werden: Adressen, Lesetaktfolgen und entsprechende Steuerbefehle werden den Gravurdatenspeichern (12_{A}, 12_{B}) über Leitungen (17_{A}, 17_{B}) zugeführt.

Das Steuerwerk (16) erzeugt außerdem das periodische Rastersignal (R), das über eine Leitung (18) an die Gravierverstärker (10_{A}, 10_{B}) gelangt.

Vor der Gravur der Gravierstränge (A, B) müssen die axialen Abstände der Gravierstichelspitzen der Gravierorgane (3_{A}, 3_{B}) genau auf die vorgegebenen Strangbreiten (SB) der Gravierstränge (A, B) eingestellt werden, was nachfolgend näher beschrieben wird.

Zur Einstellung der axialen Abstände zwischen den Gravierstichelspitzen werden zunächst Referenzpositionen (RP_{A}, RP_{B}) definiert, deren axialen Abstände voneinander den vorgegebenen Strangbreiten (SB) entsprechen. Die Lage der Referenzpositionen (RP_{A}, RP_{B}) in bezug auf den Druckzylinder (1) ist prinzipiell beliebig. Es erweist sich aber als zweckmäßig, wenn die Referenzpositionen (RP_{A}, RP_{B}) mit den axialen Startpositionen für die Gravur der Gravierstränge (A, B) auf dem Druckzylinder (1) zusammenfallen, da sich in diesem Fall nach der Abstandseinstellung der Graviestichelspitzen eine zusätzliche Positionierung des Gravierwagens (6) auf den Startpositionen erübrigt.

Die Positionierung der Gravierstichelspitzen auf die Referenzpositionen (RP_{A}, RP_{B}) erfolgt im dargestellten Ausführungsbeispiel durch automatisches axiales Verschieben der einzelnen Graviersupporte (4_{A}, 4_{B}) auf dem Gravierwagen (6) mit Hilfe der Spindelantriebe (5_{A}, 5_{B}) auf die Referenzpositionen (RP_{A}, RP_{B}). Dazu erzeugt das Steuerwerk (16) entsprechende Steuersignale (S_{A}, S_{B}), die den Spindelantrieben (5_{A}, 5_{B}) über Leitungen (19_{A}, 19_{B}) zugeführt werden.

Zur Steuerung und Überwachung der axialen Verschiebung der Gravierstichelspitzen der Gravierorgane (3_{A}, 3_{B}) auf die Referenzpositionen (RP_{A}, RP_{B}) weist die Graviermaschine erfindungsgemäß eine Positionsmeßeinrichtung (20, 21, 22) auf, die im Ausführungsbeispiel im wesentlichen aus einem in Achsrichtung des Druckzylinders (1) verschiebbaren Meßwagen (20) mit einer Videokamera (21) und aus einer Bildauswertestufe (22) zur Auswertung der von der Videokamera (28) aufgenommenen Videobilder besteht. Der Meßwagen (20) wird beispielsweise mittels einer Spindel (23) von einem Meßwagenantrieb (24) bewegt, der ebenfalls als Präzisionsantrieb mit einem Schrittmotor ausgebildet ist.

Durch Vorgabe der x-Ortskoordinate der Referenzposition (RP_{A}, RP_{B}) eines der Gravierorgane (3_{A}, 3_{B}) wird eine in das von der Videokamera (21) erzeugte Videobild eingeblendete Meßmarke mittels des Meßwagenantriebs (24) genau auf der Referenzposition (RP_{A}, RP_{B}) positioniert. Die vorgegebene x-Ortskoordinate der Referenzposition (RP_{A}, RP_{B}) und entsprechende Steuerbefehle werden von dem Steuerwerk (16) über eine Leitung (25) an den Meßwagenantrieb (24) übermittelt.

Nachdem die in das Videobild eingeblendete Meßmarke auf einer der beiden Referenzpositionen (RP_{A}, RP_{B}) positioniert ist, wird die axiale Verschiebung des entsprechenden Gravierorgans (3A, 3B) durch ein Steuersignal (S_{A}, S_{B}) an den zugehörigen Spindelantrieb (5_{A}, 5_{B}) für den Graviersupport (4_{A}, 4_{B}) aus einer Startposition heraus gestartet, welcher der Graviersupport (4_{A}, 4_{B}) durch eine vorangegangene manuelle oder motorische Grobeinstellung im Erfassungsbereich der Videokamera (21) eingenommen hat.

Die Steuerung und Überwachung der axialen Verschiebung des betreffenden Gravierorgans (3_{A}, 3_{B}) erfolgt in Abhängigkeit von dem Ergebnis der elektronischen Auswertung des mit der Videokamera (21) aufgenommenen Videobildes in der Bildauswertestufe (22).

Bei der elektronischen Auswertung des Videobildes wird die axiale Abweichung -der Istposition eines Bezugspunktes des betreffenden Gravierorgans (3A, 3B) von der eingeblendeten Meßmarke bzw. von der zugehörigen Referenzposition (RP_{A}, RP_{B}) in oder entgegen der Vorschubrichtung festgestellt, als Meßsignal (M) über eine Leitung (26) an das Steuerwerk (16) übermittelt und dort in ein entsprechendes Steuersignal (S_{A}, S_{B}) für den Spindelantriebe (5_{A}, 5_{B}) umgesetzt.

Dabei kann die Bildauswertung und Steuerung der axialen Verschiebung des Gravierorgans (3_{A}, 3_{B}) auf verschiedene Art und Weise erfolgen. Es kann beispielsweise im Videobild nur einmalig die axiale Abweichung zwischen der bei der Grobpositionierung eingenommenen Startposition des Bezugspunktes des Gravierorgans (3_{A}, 3_{B}) als Istposition und der Meßmarke als Sollposition ermittelt, gespeichert und in eine äquivalente Wegstrecke des Graviersupport (4_{A}, 4_{B}) umgerechnet werden. Alternativ dazu kann während der axialen Verschiebung des Gravierorgans (3_{A}, 3_{B}) im Videobild laufend die axiale Abweichung zwischen Istposition und Sollposition ermittelt und als Meßsignal (M) an das Steuerwerk übermittelt werden bis die Sollposition erreicht ist.

Der Bezugspunkt eines Gravierorgans (3_{A}, 3_{B}) für die Steuerung der axialen Verschiebung kann prinzipiell in einer senkrecht zur Achsrichtung des Druckzylinders (1) und durch die Gravierstichelspitze des Gravierorgans (3_{A}, 3_{B}) verlaufenden Ebene liegen. In zweckmäßiger Weise wird als Bezugspunkt eines Gravierorgans (3_{A}, 3_{B}) die Gravierstichelspitze selbst oder mindestens ein Näpfchen gewählt, das probeweise mit dem betreffenden Gravierorgan (3_{A}, 3_{B}) auf dem Druckzylinder (1) graviert wurde.

Falls die Graviersupporte (4_{A}, 4_{B}) mit den Gravierorganen (3_{A}, 3_{B}) nicht motorisch, wie in der Figur dargestellt, sondern durch manuell betätigte Feinantriebe axial positioniert werden, kann in dem Steuerwerk (16) auch ein akustisches oder optisches Signal erzeugt werden, welches einem Bediener die exakte Positionierung signalisiert. Bei manueller Grobpositionierung der Gravierorgane (3) kann eine nicht dargestellte Hilfseinrichtung, beispielsweise in Form einer senkrecht zur Achsrichtung ausgerichteten Lichtschranke, vorgesehen werden, welche dem Bediener ein anderes optisches oder akustisches Signal liefert, wenn sich die Gravierstichelspitze als Bezugspunkt eines Gravierorgans (3) innerhalb des zulässigen Meßbereichs der Positionsmeßeinrichtung (20, 21, 22) befindet.

Falls die Gravierstichelspitzen der Gravierorgane (3A, 3B) als Bezugspunkte für die axiale Verschiebung der Gravierstichelspitzen verwendet werden, erfolgt die exakte Positionierung der Gravierstichelspitzen auf die einzelnen Referenzpositionen (RP_{A}, RP_{B}) in zweckmäßiger Weise bevor der Druckzylinder (1) in die Graviermaschine eingebracht wird. Die Videokamera (21) wird dabei in jeder Referenzposition (RP_{A}, RP_{B}) auf dem Meßwagens (20) senkrecht zur Achsrichtung derart verschoben, daß sie ein scharfes Videobild der jeweiligen Gravierstichelspitze als Bezugspunkt liefert.

Falls dagegen die mit den Gravierorganen (3_{A}, 3_{B}) probeweise gravierten Näpfchen als Bezugspunkte für die axiale Verschiebung der Gravierstichelspitzen Verwendung finden, werden die Gravierorgane (3_{A}, 3_{B}) nach Einlegen des Druckzylinders (1) in die Graviermaschine grob auf ihre Referenzpositionen (RP_{A}, RP_{B}) eingestellt und dann mindestens ein Näpfchen pro Gravierorgan (3_{A}, 3_{B}) auf dem Druckzylinder (1) graviert. Nach der Gravur dieser Näpfchen wird die Videokamera (21) nacheinander auf die einzelnen Referenzpositionen (RP_{A}, RP_{B}) gefahren. In jeder Referenzposition (RP_{A}, RP_{B}) wird dann ein Videobild des probeweise gravierten Näpfchens als Bezugspunkt aufgenommen und entsprechend ausgewertet. Die Grobpositionierung der Gravierorgane (3_{A}, 3_{B}) kann dabei, wie zuvor beschrieben, mit der Positionsmeßeinrichtung (20, 21, 22) und der Hilfseinrichtung erfolgen.

Die Erfindung ist nicht auf die dargestellten Ausführungsbeispiele beschränkt.

Alternativ zu einem elektromagnetischen Gravierorgan mit einem Gravierstichel als Schneidwerkzeug kann auch ein Elektronenstrahl- oder Laserstrahlgravierorgan verwendet werden. In diesem Fall kann die Achse des Bearbeitungsstrahl als Bezugspunkt dienen.

Auch für die Positionsmeßeinrichtung (20, 21, 22) sind andere Ausführungsformen denkbar. Zur Einstellung des Meßwagens (20) auf die einzelnen Referenzpositionen (RP_{A}, RP_{B}) kann beispielsweise auch ein handelsübliches Längenmeßsystem MR-MAGNESCALE ® der Firma Sony Magnescale Inc. Tokyo, JP, verwendet werden. In diesem Fall ist in Achsrichtung ein magnetisch lesbarer Maßstab angeordnet, der von einem am Meßwagen (20) befindlichen Lesekopf gelesen und ausgewertet wird.

Die Positionsmeßeinrichtung (20, 21, 22) kann in vorteilhafter Weise auch bei der Gravur der Gravierstränge (A, B) zur laufenden Überwachung der Istpositionen der Gravierstichelspitzen der Gravierorgane verwendet werden.

Das erfindungsgemäße Verfahren ist insbesondere zum genauen Positionieren einer großen Anzahl von Gravierorganen für die Gravur von Graviersträngen geeignet, da die Vorbereitungsphase für die Gravur wesentlich verkürzt und eine hohe Graviergenauigkeit erreicht wird.

## Patentansprüche

1. Verfahren zum Positionieren von Gravierorganen in einer elektronischen Graviermaschine zur Gravur von Druckzylindern für den Tiefdruck, bei dem mindestens zwei in Achsrichtung des Druckzylinders (1) nebeneinander liegende Gravierstränge (A, B) vorgegebener Strangbreiten (SB) in Form von Näpfchen mit jeweils einem zugeordneten Gravierorgan (3) graviert werden, die Gravierorgane (3) vor der Gravur axial zum Druckzylinder (1) positioniert werden und
- die Gravierorgane (3) bei der Gravur eine axiale Vorschubbewegung am Druckzylinder (1) entlang ausführen, **dadurch gekennzeichnet, daß**
- für die Gravierorgane (3) axiale Referenzpositionen (RP) vorgegeben werden, deren axialen Abstände zueinander den vorgegebeneri Strangbreiten (SB) der Gravierstränge (A, B) entsprechen,
- eine elektronische Positionsmeßeinrichtung (20, 21, 22) nacheinander auf die axialen Referenzpositionen (RP) positioniert wird,
- in jeder Referenzposition (RP) die axiale Abweichung eines Bezugspunktes des zugeordneten Gravierorgans (3) von der Referenzposition (RP) mit der Positionsmeßeinrichtung (20, 21, 22) festgestellt wird und
- die Gravierorgane (3) mit ihren Bezugspunkten axial um die festgestellten Abweichungen auf die zugehörigen Referenzpositionen (RP) verschoben werden.

2. Verfahren nach Anspruch 1, **dadurch gekennzeichnet, daß** die Gravierorgane (3) axial verschoben werden, bis die Positionsmeßeinrichtung (20, 21, 22) jeweils die lagemäßige Übereinstimmung des Bezugspunktes mit der entsprechenden Referenzposition (RP) festgestellt hat.

3. Verfahren nach Anspruch 1 oder 2, **dadurch gekennzeichnet, daß**
- die Gravierorgane (3) auf einem Gravierwagen (6) verschiebbar und arretierbar angeordnet sind,
- die Gravierorgane (3) nach dem Verschieben auf die zugehörigen Referenzpositionen (RP) an dem Gravierwagen (6) arretiert werden und
- der Gravierwagen (6) mit den arretierten Gravierorganen (3) bei der Gravur der Gravierstränge (A, B) die Vorschubbewegung am Druckzylinder (1) entlang ausführt.

4. Verfahren nach einem der Ansprüche 1 bis 3, **dadurch gekennzeichnet, daß** der Bezugspunkt eines Gravierorgans (3) in einer senkrecht zur Achse des Druckzylinders (1) und durch das die Näpfchen erzeugende Element des Gravierorgans (3) verlaufenden Ebene liegt.

5. Verfahren nach einem der Ansprüche 1 bis 4, **dadurch gekennzeichnet, daß** der Bezugspunkt des Gravierorgans (3) die Spitze des Gravierstichels (9) eines elektromagnetischen Gravierorgans (3) ist.

6. Verfahren nach einem der Ansprüche 1 bis 4, **dadurch gekennzeichnet, daß** der Bezugspunkt eines Gravierorgans (3) mindestens ein probeweise mit dem Gravierorgan (3) auf dem Druckzylinder (1) graviertes Näpfchen ist.

7. Verfahren nach einem der Ansprüche 1 bis 6, **dadurch gekennzeichnet, daß** die Positionsmeßeinrichtung (20, 21, 22) aus einer Videokamera (21) zur Aufnahme des Videobildes des Bezugspunktes eines Gravierorgans (3) und einer Bildauswertestufe (22 ) zur Ermittlung der Abweichung des Bezugspunktes von der zugeordneten Referenzposition (RP) durch elektronische Auswertung des Videobildes besteht.

8. Verfahren nach Anspruch 7, **dadurch gekennzeichnet, daß** die Videokamera (21) auf einem Meßwagen (20) angeordnet ist, der in Achsrichtung des Druckzylinders (1) verschiebbar und positionierbar ist.

9. Verfahren nach Anspruch 8, **dadurch gekennzeichnet, daß** die Videokamera (21) mittels eines Antriebs (24) für den Meßwagen (20) automatisch auf den Referenzpositionen (RP) positioniert wird.

10. Verfahren nach einem der Ansprüche 1 bis 9, **dadurch gekennzeichnet, daß** die Referenzpositionen (RP) mit den Gravur-Startpositionen der Gravierstränge (A, B) auf dem Druckzylinder (1) übereinstimmen.

11. Verfahren nach einem der Ansprüche 1 bis 10, **dadurch gekennzeichnet, daß** der Gravierwagen (6) vor der Gravur derart verschoben wird, daß die Referenzpostionen (RP) der Gravierorgane (3) mit den Gravur-Startpositionen der Gravierstränge (A, B) auf dem Druckzylinder (1) übereinstimmen.

12. Verfahren nach einem der Ansprüche 1 bis 11, **dadurch gekennzeichnet, daß** jedes Gravierorgan (3) auf dem Gravierwagen (6) mittels einer Verschiebevorichtung (4, 5) automatisch auf die zugeordnete Referenzposition (RP) verschoben wird.

13. Verfahren nach Anspruch 12, **dadurch gekennzeichnet, daß** die Verschiebevorrichtung (4, 5) in Abhängigkeit von den mit der Positionsmeßeinrichtung (20, 21, 22) festgestellten Abweichungen gesteuert wird.

14. Verfahren nach einem der Ansprüche 1 bis 13, **dadurch gekennzeichnet, daß** die Gravierorgane (3) vor Feststellung der Abweichungen grob auf den Referenzpositionen (RP) positioniert werden.

15. Graviermaschine zur Gravur von mindestens zwei in Achsrichtung eines Druckzylinders (1) nebeneinander liegenden Graviersträngen (A, B) Vorgegebener Strangbreiten (SB) mit jeweils einem zugeordneten Gravierorgan (3), bestehend aus
- einem rotationsfähig gelagerten Druckzylinder (1), der von einem ersten Antrieb (2) gedreht wird,
- einem Gravierwagen (6), der mittels eines zweiten Antriebs (8) in Achsrichtung des Druckzylinders (1) bewegbar ist und
- Gravierorganen (3) zur Gravur der Gravierstränge (A, B), welche auf dem Gravierwagen (6) verschiebbar und arretierbar angeordnet sind, **gekennzeichnet durch**
- eine in Achsrichtung des Druckzylinders (1) verschiebbare und auf vorgegebene axiale Referenzpositionen (RP) für die Gravierorgane (3) positionierbare Positionsmeßeinrichtung (20, 21, 22) zur Feststellung der genauen Positionierung der Gravierorgane (3) auf ihren Referenzpositionen (RP) und
- eine **durch** die Positionsmeßeinrichtung (20, 21, 22) gesteuerte Verschiebevorrichtung (4, 5) für jedes Gravierorgan (3) auf dem Gravierwagen (6) zur automatischen Verschiebung der Gravierorgane (3) auf ihre Referenzpositionen (RP).

16. Graviermaschine nach Anspruch 15, **dadurch gekennzeichnet, daß** die Positionsmeßeinrichtung (20, 21, 22) aus folgenden Komponenten besteht:
- einer auf einem Meßwagen (20) montierten Videokamera (21) zur Aufnahme der Videobilder der Bezugspunkte der Gravierorgane (3) und
- einer Bildauswertestufe (22) zur Ermittlung der axialen Abweichungen der Bezugspunkte von den vorgegebenen Referenzpositionen (RP) durch Auswertung der mit der Videokamera (21) aufgenommenen Videobilder.

17. Graviermaschine nach Anspruch 15 und 16, **dadurch gekennzeichnet, daß** der Meßwagen (20) mit der Videokamera (21) in Achsrichtung des Druckzylinders (1) verschiebbar ist.

18. Graviermaschine nach einem der Ansprüche 15 bis 17, **dadurch gekennzeichnet, daß** der Meßwagen (20) mit der Videokamera (21) durch einen Antrieb (24) automatisch auf die vorgegebenen axialen Referenzpositionen (RP) positionierbar ist.

## Claims

1. Method for positioning engraving heads in an electronic engraving machine for engraving printing-cylinders for intaglio printing, in which at least two engraving strings (A, B) of specified widths (SB) lying side by side in the axial direction of the printing cylinder (1) are engraved, each by means of a dedicated engraving head (3), as cells, the engraving heads (3) are positioned axially with respect to the printing cylinder (1) prior to engraving and
- the engraving heads (3) execute an axial advance motion along the printing cylinder (1) in the course of the engraving process, **characterized in that**
- axial reference positions (RP), whose axial spacing corresponds to the specified widths (SB) of the engraving strings (A, B), are specified for the engraving heads (3),
- an electronic position measuring apparatus (20, 21, 22) is successively positioned at the axial reference positions (RP),
- in each reference position (RP), the axial deviation of a datum point of the dedicated engraving head (3) from that reference position (RP) is determined with the position measuring apparatus (20, 21, 22) and
- the engraving heads (3) with their datum points are shifted axially by the detected deviations to their assigned reference positions (RP).

2. Method according to Claim 1, **characterized in that** the engraving heads (3) are shifted axially until the position measuring apparatus (20, 21, 22) has determined that the individual datum point is in register with the corresponding reference position (RP).

3. Method according to Claim 1 or Claim 2, **characterized in that**
- the engraving heads (3) are arranged shiftably and lockably on an engraving carriage (6),
- the engraving heads (3) are locked after shifting to their assigned reference positions (RP) on the engraving carriage (6) and
- the engraving carriage (6) with the engraving heads (3) locked in position executes the advance motion along the printing cylinder (1) as the strings (A, B) are engraved.

4. Method according to any one of Claims 1 to 3, **characterized in that** the datum point of an engraving head (3) lies in a plane extending perpendicularly to the axis of the printing cylinder (1) and through the element of the engraving head (3) producing the cells.

5. Method according to any one of Claims 1 to 4, **characterized in that** the datum point of the engraving head (3) is the tip of the engraving stylus (9) of an electromagnetic engraving head (3).

6. Method according to any one of Claims 1 to 4, **characterized in that** the datum point of an engraving head (3) is at least one cell experimentally engraved on the printing cylinder (1) by means of the engraving head (3).

7. Method according to any one of Claims 1 to 6, **characterized in that** the position measuring apparatus (20, 21, 22) comprises a video camera (21) to take a video picture of the datum point of an engraving head (3) and an image evaluation stage (22) to determine the deviation of the datum point from the assigned reference position (RP) by electronic analysis of the video picture.

8. Method according to Claim 7, **characterized in that** the video camera (21) is mounted on a measuring carriage (20) which is shiftable and positionable in the axial direction of the printing cylinder (1).

9. Method according to Claim 8, **characterized in that** the video camera (21) is positioned automatically at the reference positions (RP) by means of a drive (24) for the measuring carriage (20).

10. Method according to any one of Claims 1 to 9, **characterized in that** the reference positions (RP) coincide with the engraving start positions of the engraving strings (A, B) on the printing cylinder (1).

11. Method according to any one of Claims 1 to 10, **characterized in that** the engraving carriage (6) is shifted prior to engraving so that the reference positions (RP) of the engraving heads (3) coincide with the engraving start positions of the engraving strings (A, B) on the printing cylinder (1).

12. Method according to any one of Claims 1 to 11, **characterized in that** each engraving head (3) is automatically shifted to its assigned reference position (RP) on the engraving carriage (6) by means of a shift mechanism (4, 5).

13. Method according to Claim 12, **characterized in that** the shift mechanism (4, 5) is controlled as a function of the deviations detected with the position measuring apparatus (20, 21, 22).

14. Method according to any one of Claims 1 to 13, **characterized in that** the engraving heads (3) are roughly positioned at the reference positions (RP) prior to determination of the deviations.

15. Engraving machine for engraving at least two engraving strings (A, B) of specified widths (SB) lying side by side in the axial direction of the printing cylinder (1), each by means of a dedicated engraving head (3), comprising
- a rotatably mounted printing cylinder (1) which is turned by a first drive (2),
- an engraving carriage (6) which is traversable in the axial direction of the printing cylinder (1) by means of a second drive (8) and
- engraving heads (3) for engraving the strings (A, B), which are arranged shiftably-and lockably on the engraving carriage (6), **characterized by**
- a position measuring apparatus (20, 21, 22) shiftable in the axial direction of the printing cylinder (1) and positionable at specified axial reference positions (RP) for the engraving heads (3), for determining the precise positioning of the engraving heads (3) at their reference positions (RP), and
- a shift mechanism (4, 5) for each engraving head (3) on the engraving carriage (6), controlled by the position measuring apparatus (20, 21, 22), to shift the engraving heads (3) to their reference positions (RP) automatically.

16. Engraving machine according to Claim 15, **characterized in that** the position measuring apparatus (20, 21, 22) comprises the following components:
- a video camera (21) mounted on a measuring carriage (20) to take video pictures of the datum points of the engraving heads (3) and
- an image evaluation stage (22) to determine the axial deviations of the datum points from the specified reference positions (RP) by analysing the video pictures taken with the video camera.

17. Engraving machine according to Claims 15 and 16, **characterized in that** the measuring carriage (20) with the video camera (21) is shiftable in the axial direction of the printing cylinder (1).

18. Engraving machine according to any one of Claims 15 to 17, **characterized in that** the measuring carriage (20) is automatically positionable with the video camera at the specified axial reference positions (RP) by a drive (24).

## Revendications

1. Procédé de positionnement des organes de gravure d'une machine à graver électronique pour graver des cylindres d'impression en taille douce, selon lequel on grave des cuvettes à l'aide d'un organe de gravure (3) associé, dans au moins deux bandes de gravure (A, B) de largeur prédéterminée (SB), juxtaposées dans la direction axiale du cylindre d'impression (1), les organes de gravure (3) étant positionnés avant la gravure, axialement par rapport au cylindre d'impression (1) et
- lors du gravage, les organes de gravure (3) sont guidés le long du cylindre d'impression (1) suivant un mouvement d'avancée, axial,
**caractérisé en ce qu'**
- on prédéfinit des positions de référence axiale (RP) pour les organes de gravure (3), dont la distance axiale correspond à la largeur prédéterminée (SB) des bandes de gravure (A, B),
- on positionne une installation de mesure de position, électronique (20, 21, 22) successivement sur les positions de références axiales (RP),
- dans chaque position de référence (RP) on détermine la déviation axiale d'un point de référence de l'organe de gravure (3) associé par rapport à la position de référence (RP) à l'aide de l'installation de mesure de position (20, 21, 22) et
- on déplace les organes de gravure (3) avec leur point de référence axial selon des déviations constatées par rapport aux positions de références correspondantes (RP).

2. Procédé selon la revendication 1,
**caractérisé en ce qu'**
on déplace axialement les organes de gravure (3) jusqu'à ce que l'installation de mesure de position (20, 21, 22) ait déterminé chaque fois la concordance de position du point de référence et de la position de référence correspondante (RP).

3. Procédé selon l'une quelconque des revendications 1 ou 2,
**caractérisé en ce que**
- les organes de gravure (3) sont montés coulissants sur un chariot de gravure (6) et peuvent être bloqués,
- les organes de gravure (3) sont bloqués sur le chariot de gravure (6) après décalage sur les positions de références correspondantes (RP) et
- le chariot de gravure (6) avec les organes de gravure (3), bloqués, lors du gravage des bandes de gravure (A, B) effectue un mouvement d'avancée le long du cylindre d'impression (1).

4. Procédé selon l'une quelconque des revendications 1 à 3,
**caractérisé en ce que**
le point de référence d'un organe de gravure (3) est situé dans un plan perpendiculaire à l'axe du cylindre d'impression (1) et à l'élément de l'organe de gravure (3) réalisant les cuvettes.

5. Procédé selon l'une quelconque des revendications 1 à 4,
**caractérisé en ce que**
le point de référence de l'organe de gravure (3) est la pointe d'un poinçon de gravure (9) d'un organe de gravure électromagnétique (3).

6. Procédé selon l'une quelconque des revendications 1 à 4,
**caractérisé en ce que**
le point de référence d'un organe de gravure (3) est au moins une cuvette gravée à titre d'essai avec l'organe de gravure (3) dans le cylindre d'impression (1).

7. Procédé selon l'une quelconque des revendications 1 à 6,
**caractérisé en ce que**
l'installation de mesure de position (20, 21, 22) se compose d'une caméra vidéo (21) pour prendre l'image vidéo du point de référence d'un organe de gravure (3) et d'un étage de traitement d'image (22) pour déterminer la déviation du point de référence par rapport à la position de référence associée (RP) par l'exploitation électronique de l'image vidéo.

8. Procédé selon la revendication 7,
**caractérisé en ce que**
la caméra vidéo (21) est installée sur un chariot de mesure (20) qui peut coulisser et se positionner dans la direction axiale du cylindre d'impression (1).

9. Procédé selon la revendication 8,
**caractérisé en ce que**
la caméra vidéo (21) est positionnée à l'aide d'un moteur (24) pour le chariot de mesure (20), automatiquement sur les positions de références (RP).

10. Procédé selon l'une quelconque des revendications 1 à 9,
**caractérisé en ce que**
les positions de références (RP) correspondent aux positions de démarrage de gravage des bandes de gravure (A, B) sur le cylindre d'impression (1).

11. Procédé selon l'une quelconque des revendications 1 à 10,
**caractérisé en ce que**
l'on déplace le chariot de gravure (6) avant le gravage, de façon que les positions de références (RP) des organes de gravure (3) correspondent aux positions de démarrage de gravage des bandes de gravure (A, B) sur le cylindre d'impression (1).

12. Procédé selon l'une quelconque des revendications 1 à 11,
**caractérisé en ce que**
chaque organe de gravure (3) est déplacé sur le chariot de gravure (6) à l'aide d'un dispositif de déplacement (4, 5) automatiquement vers la position de référence (RP), associée.

13. Procédé selon la revendication 12,
**caractérisé en ce que**
le dispositif de déplacement (4, 5) est commandé en fonction des déviations constatées à l'aide de l'installation de mesure de position (20, 21, 22).

14. Procédé selon l'une quelconque des revendications 1 à 13,
**caractérisé en ce que**
les organes de gravure (3) sont positionnés grossièrement sur les positions de références (RP) avant la détermination des déviations.

15. Machine de gravure pour graver au moins deux bandes de gravure (A, B) juxtaposées dans la direction axiale d'un cylindre d'impression (1) et ayant des largeurs de bande (SB) prédéterminées, avec chaque fois un organe de gravure (3) associé, comprenant :
- un cylindre d'impression (1), monté à rotation, entraîné par un premier moyen d'entraînement (2),
- un chariot de gravure (6) déplacé à l'aide d'un second moyen d'entraînement (8) dans la direction axiale du cylindre d'impression (1) et
- des organes de gravure (3) pour graver des bandes de gravure (A, B), ces organes étant montés de manière coulissante et bloqués sur le chariot de gravure (6),
**caractérisée par**
- une installation de mesure de position (20, 21, 22) coulissant dans la direction axiale du cylindre d'impression (1) et susceptible d'être positionnée sur des positions de références axiales prédéterminées (RP) des organes de gravure (3), pour déterminer le positionnement précis des organes de gravure (3) par rapport à leur position de référence (RP) et
- un dispositif de coulissement (4, 5) commandé par l'installation de mesure de position (20, 21, 22) pour chaque organe de gravure (3) sur le chariot de gravure (6), pour coulisser automatiquement les organes de gravure (3) sur leur position de référence (RP).

16. Machine à graver selon la revendication 15,
**caractérisé en ce que**
l'installation de mesure de position (20, 21, 22) comprend les éléments suivants :
- une caméra vidéo (21) installée sur un chariot de mesure (20) pour prendre les images vidéo des points de référence des organes de gravure (3) et
- un étage de traitement d'image (22) pour déterminer les déviations axiales des points de référence des positions de références prédéterminées (RP) par l'exploitation des images vidéo de la caméra vidéo (21).

17. Machine à graver selon l'une quelconque des revendications 15 et 16,
**caractérisée en ce que**
le chariot de mesure (20) est coulissant avec la caméra vidéo (21) dans la direction axiale du cylindre d'impression (1).

18. Machine à graver selon l'une quelconque des revendications 15 à 17,
**caractérisée en ce que**
le chariot de mesure (20) avec la caméra vidéo (21) est positionné automatiquement par un moyen d'entraînement (24) sur les positions de références axiales prédéterminées (RP).
